(19) Europäisches Patentamt
European Patent Office
Office européen des brevets

(11) EP 0 559 043 B1

(12) **EUROPÄISCHE PATENTSCHRIFT**

(45) Veröffentlichungstag und Bekanntmachung des Hinweises auf die Patenterteilung:
03.04.1996 Patentblatt 1996/14

(51) Int Cl.6: **F28F 27/00**, B01D 3/42, G05D 23/19

(21) Anmeldenummer: 93102757.7

(22) Anmeldetag: 22.02.1993

(54) **Verfahren zur Regelung von Wärmeübertragern**

Method for heat exchanger control

Méthode de contrôle des échangeurs de chaleur

(84) Benannte Vertragsstaaten:
BE DE ES FR GB IT NL

(30) Priorität: 06.03.1992 DE 4207144

(43) Veröffentlichungstag der Anmeldung:
08.09.1993 Patentblatt 1993/36

(73) Patentinhaber: BAYER AG
D-51368 Leverkusen (DE)

(72) Erfinder:
• Rhiel, Franz Ferdinand, Dr.
W-4047 Dormagen-Delhoven (DE)
• Steude, Heinrich, Dipl.-Ing.
W-5090 Leverkusen 1 (DE)
• Weymans, Günther, Dr.
W-5090 Leverkusen 1 (DE)
• Elgeti, Klaus, Prof. Dr.
W-5060 Bergisch Gladbach 2 (DE)

(56) Entgegenhaltungen:
EP-A- 0 155 826          DE-A- 2 421 003
US-A- 3 676 304          US-A- 4 836 146

• PATENT ABSTRACTS OF JAPAN vol. 12, no. 298 (P-744) 15. August 1988 & JP-A-63 071 625 (MITSUBISHI HEAVY IND LTD) 1. April 1988

## Beschreibung

Die Erfindung geht aus von einem Verfahren zur Regelung eines mit einem gasförmigen Heizmittel gespeisten Wärmetauschers, der von einem Prozeßmedium durchströmt wird und bei dem mittels eines Prozeßreglers TC ein Prozeßparameter (Prozeßregelgröße) durch Nachstellung des in dem Wärmetauscher hineinfließenden Enthalpiestrom konstant geregelt wird.

Aus US-A-3 676 304 ist ein Verfahren zur Regelung der Verdampfungsheizung bei einer Fraktionierkolonne bekannt, bei dem eine Regelung bzw. Steuerung der Wärmezufuhr auf der Basis der Berechnung des Momentanwertes der durch das Heizmittel an den Verdampfer übertragenen Wärme erfolgt. In Abhängigkeit dieses Momentanwertes wird der Massenfluß des Heizmittels so geregelt, daß eine vorgegebene Wärmemenge in die Fraktionierkolonne übertragen wird. Dabei wird der Sollwert des Heizmittel-Mengenstromreglers in Abhängigkeit der Zusammensetzung der zu trennenden Stoffe an einer bestimmten Stelle in der Kolonne oder in Abhängigkeit des Flüssigkeitsstandes im unteren Teil der Kolonne nachgestellt.

Die Erfindung liegt ebenfalls auf dem Gebiet verfahrenstechnischer Operationen, die einer geregelten Energiezufuhr bedürfen. Die Versorgung dieser Energieverbraucher erfolgt im großtechnischen Maßstab zumeist zentral von einem Kraftwerk aus. Der vom Kraftwerk produzierte Wasserdampf wird über eine sogenannte Dampfschiene zu den einzelnen Verbrauchern geleitet. Beim Verbraucher wird der ankommende Dampf in den seltensten Fällen direkt dem Prozeß zugeleitet. Überwiegend wird durch einen zwischengeschalteten Wärmeübertrager (Wärmetauscher) lediglich die im Wasserdampf enthaltene Wärme an den Prozeß übertragen. Die Steuerung der übertragenen Energiemenge bildet den Gegenstand der vorliegenden Erfindung.

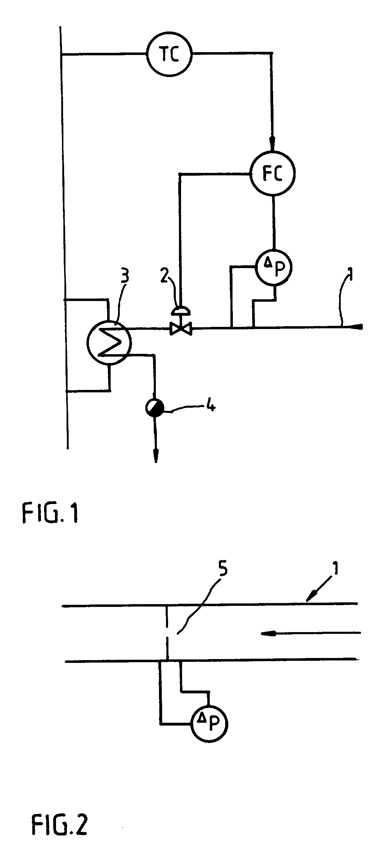

Das im großtechnischen Maßstab gebräuchliche Verfahren läßt sich anhand von Figur 1 beschreiben. Um beispielsweise die Temperatur in einem Prozeß zu regeln (TC), wird die eigentliche Stellgröße, die übertragene Energie, in eine Ersatzstellgröße, nämlich die in den Wärmetauscher 3 geleitete Dampfmenge übersetzt. In der Zeichnung ist dies durch die Steuerungseinheit FC (feed control) dargestellt. Sie steuert das Ventil 2. Als Kontrollwert dient der Zufuhrkontrolle zumeist der Druckabfall des Dampfes über eine Meßblende 5 innerhalb der Zuleitung. Unter idealen Bedingungen, d.h. bei konstantem Druck und konstanter Temperatur, ist der Volumenstrom und damit auch der Massenstrom durch die Meßblende der Wurzel des Druckabfalles an der Meßblende proportional (Blendengleichung).

Der Nachteil dieses bekannten Verfahrens besteht jedoch darin, daß sich die Bedingungen (Druck, Temperatur) innerhalb einer Dampfschiene, die vom Kraftwerk aus mehrere Verbraucher speist, durchaus ändern können. Beispielsweise werden bereits durch das Zu- und Abschalten von Verbrauchern entlang einer Dampfschiene Störungen erzeugt.

Es bestand daher die Aufgabe, eine Regelung zur besseren Kontrolle des in einen Prozeß eingetragenen Enthalpiestromes zu entwickeln.

Diese Aufgabe wurde ausgehend von dem eingangs beschriebenen Verfahren erfindungsgemäß unter Durchführung folgender Schritte gelöst:

a) In der Zufuhrleitung werden der Massenstrom $\dot{m}$, der Druck $P_i$ und die Temperatur $T_i$ des Heizmittels gemessen.

b) Zusätzlich wird die Temperatur des den Wärmetauscher verlassenden Heizmittels gemessen.

c) Aus den in den Schritten a) und b) bestimmten Meßgrößen werden die in den Wärmetauscher hinein- und herausfließenden Enthalpieströme bestimmt und daraus die Differenz der beiden Enthalpieströme gebildet, die dem vom Wärmetauscher übertragenen Enthalpiestrom entspricht.

d) Durch Nachstellung des in den Wärmetauscher hineinfließenden Enthalpiestromes wird der vom Wärmetauscher übertragene Enthalpiestrom auf einen Sollwert geregelt, der vom Prozeßregler TC in der Weise nachgestellt wird, daß die Prozeßregelgröße konstant bleibt.

Die Messung der Größen Druck $P_i$, Temperatur $T_i$ und die Bestimmung des Massenstromes $\dot{m}$ werden durch bekannte Verfahren und Vorrichtungen durchgeführt. Dabei ist allerdings zu beachten, daß die üblichen Verfahren zur Bestimmung des Massenstromes (Drossel, induktive Durchflussmessung) lediglich einen Volumenstrom bestimmen, der sich erst nach Multiplikation mit der Dichte $\delta$ des Arbeitsmediums in einen Massenstrom umrechnen läßt. Bei dieser Umrechug können Ungenauigkeiten auftreten, wenn nicht berücksichtigt wird, daß $\delta$ von $T_i$ und $P_i$ abhängt. Der Enthalpiestrom in den Wärmeübertrager ergibt sich durch Multiplikation des Massenstromes m mit der spezifischen Enthalpie $h_i$ des Arbeitsmediums, die sich bei Kenntnis der beiden Zustandsgrößen $P_i$ und $T_i$ auf bekannte Weise errechnen läßt. Befindet sich das Arbeitsmedium, beispielsweise Wasserdampf, jedoch exakt an einer Phasengrenze, so reicht unter Ausnutzung der bekannten thermodynamischen Zusammenhänge die Bestimmung einer der beiden Größen, Druck oder Temperatur, zur Gewinnung der übrigen Zustandsgrößen, also auch der spez. Enthalpie. Dies ist beispielsweise der Fall, wenn als Arbeitsmedium Wasserdampf im gesättigten Zustand verwendet wird.

Bei Kenntnis des Enthalpiestromes E läßt sich dieser als Stellgröße verwenden. Die eigentliche Regelgröße, beispielsweise die Temperatur in einem verfahrenstechnischen Prozeß, läßt sich um einen bestimmten Betrag ändern, wenn der Enthalpiestrom in den Wärmeübertrager um einen dieser Änderung entsprechenden Betrag vergrößert beziehungsweise verkleinert wird. Im einfachsten Fall geschieht dies durch eine Zufuhrkontrolle (FC), bei der mit Hilfe eines Ventils der Massenstrom in den Wärmeübertrager gesteuert wird.

Bei dem erfindungsgemäßen Verfahren wird nicht nur der in den Wärmetauscher hineinfließende Enthalpiestrom, sondern auch der den Wärmetauscher wieder verlassende Enthalpiestrom berücksichtigt. Dies ist zu erreichen, indem man die spezifische Enthalpie $h_0$ von der spezifischen Enthalpie $h_i$ des zugeleiteten Arbeitsmediums (Heizmediums) abzieht und diese Differenz mit dem Massenstrom $\dot{m}$ multipliziert. Dabei wird vorausgesetzt, daß keine Massenverluste im Wärmetauscher auftauchen. Bei Vorliegen von Kondensat ist es ausreichend zur Bestimmung von $h_0$ lediglich die Temperatur des Kondensates zu messen.

Durch das neue Verfahren wird eine genaue, direkte Regelung der in einem Prozeß eingespeisten Energiemenge ermöglicht. Das neue Regelungsverfahren berücksichtigt Störeinflüsse, denen das Arbeitsmedium in der Speiseleitung (Dampfschiene) unterworfen ist. Damit werden diese Störeinflüsse vom eigentlichen Prozeß (Destillation etc.) ferngehalten. Dadurch wird der Vorteil erzielt, daß sich dieser Prozeß innerhalb enger und genauer definierbaren Toleranzen steuern läßt. Zudem erfolgt eine wirtschaftlichere Ausnutzung produzierter Wärmemengen.

Das Verfahren ist mit Vorteil bei technischen Destillations- bzw. Rektifikationskolonnen mit Durchmessern über 0,150 m, bevorzugt über 0,5 m, insbesondere über 1,0 m, einzusetzen. Diese technischen Kolonnen fordern aufgrund ihrer Trägheit eine besonders genaue Steuerung.

Eine bevorzugte Regelgröße auf der Prozeßseite ist die Temperatur, da diese die wichtigste Prozeßgröße in den genannten Anlagen darstellt. Aber auch andere Größen, wie beispielsweise der Sumpfstand, können mit dem neuen Verfahren geregelt werden.

Eine weitere bevorzugte Variante des Verfahrens berücksichtigt zudem das zeitliche oder dynamische Verhalten des Wärmeübertragungsprozesses. Das dynamische Verhalten wird durch Ermittlung der Übertragungsfunktion bestimmt. Dazu kann z.B. der Eingangstemperatur des Arbeitsmediums ein definierter zeitlicher Verlauf, etwa eine Sprungfunktion oder eine periodische Funktion oder eine Kombination von beiden, aufgeprägt werden und das Verhalten des Wärmetauschers durch die Messung des zeitlichen Verlaufes der Temperatur $T_o$ des Arbeitsmediums am Ausgang des Wärmetauschers bestimmt werden. Dieses Verhalten hängt u,a, vom Durchsatz und der Verweilzeitcharakteristik des Massestromes im Wärmetauscher sowie der Wärmekapazität des Wärmetauschers ab. Im Gegensatz zum oben beschriebenen statischen Fall, wo der übertragene Enthalpiestrom E mit $\dot{m}\cdot(h_i\text{-}h_o)$ gleichgesetzt wurde, müssen im dynamischen Fall also Größen wie bevorzugterweise die Totzeit $\ominus$ und die Zeitkonstante $\tau$ des Wärmetauschers sowie das zeitliche Verhalten der Austrittstemperatur $T_o$ berücksichtigt werden. Einen besonders bevorzugten Ansatz zur Bestimmung des übertragenen Enthalpiestromes liefert

$$E(t) = \dot{m}\cdot[h_i(t-\ominus)-h_o(t)-\tau\cdot c\cdot \frac{dTo(t)}{dt}]$$

mit:

$$\ominus = \frac{K_1}{V_k} \; ; \; \tau = \tau_b \cdot K_2 \, , \, \tau_b = \frac{V}{V_k}$$

Dabei bedeutet

E : Übertragene Enthalpie
t : Zeit
$\ominus$ : Totzeit
$\tau$ : Zeitkonstante
$\tau_b$ : rechnerische Verweilzeit des Heizmittels im Wärmetauscher
$K_1, K_2$: Apparate (Wärmetauscher)-Konstanten (rechnerisch oder experimentell bestimmbar)
V : Flüssigkeitsvolumen des Wärmetauschers auf der Heizseite
$\dot{V}_k$ : Volumenstrom des Kondensats
$\dot{m}$ : Massenstrom des Heizmittels (Dampf)
h : spezifische Enthalpie des Dampfes/Kondensats
T : Temperatur in °C (oder K)
c : spezifische Wärme des Kondensats
Indizes: i : Wärmetauscher Eingang
o : Wärmetauscher Ausgang (Kondensat)

Der Enthalpiestrom läßt sich also mittels geeignet gewählter elektronischer Bausteine wie Multiplizierern und Differenziergliedern aus meßbaren Größen bestimmen. Ebenso sind für diese Aufgabe programmierbare Mikroprozessoren anwendbar.

Trotz aufwendigerer Steuerungselektronik besitzt diese. Durchführungsform den Vorteil, präziser auf rasche Zuflußstörungen des Arbeitsmediums reagieren zu können.

Die genaue Kenntnis des übertragenen Enthalpiestromes im Wärmetauscher wird in einer bevorzugten Variante des Verfahrens ausgenutzt, um ein Kontrollsystem zur Überwachung des Wärmeübertragungsverhaltens der Anlage zu erhalten.

Die übertragene Enthalpie, d.h. die in den Prozeß eingebrachte Wärmemenge, kann als Produkt $k \cdot A \cdot \Delta T$ dargestellt werden. Dabei ist $\Delta T$ die Temperaturdifferenz zwischen der Temperatur des Arbeitsmediums und der Temperatur des warmegespeisten Prozesses, also beispielsweise die Temperatur im Sumpf einer Destillieranlage. A ist ein Maß für die Fläche, durch die der Wärmetransport stattfindet, und k ist der Wärmedurchgangskoeffizient. Durch Vergleich der übertragenen Enthalpiemenge mit der Änderung der Temperaturdifferenz $\Delta T$ läßt sich (A als konstant angenommen) eine Änderung, beispielsweise eine Verschlechterung des Koeffizienten k feststellen.

Durch die Überwachung des Warmeübertragungsverhaltens, wie z.B. einer Verschlechterung, auch Fouling genannt, ist beispielsweise ein Umschalten auf gereinigte Wärmeübertrager beziehungsweise das Abschalten zur Reinigung steuerbar.

Die Erfindung wird im folgenden anhand der Zeichnung beispielhaft erläutert. Dabei zeigen

Figur 1 und Figur 2       das bekannte Schema zur Temperaturregelung eines Prozesses mittels eines dampfgespeisten Wärmeübertragers.

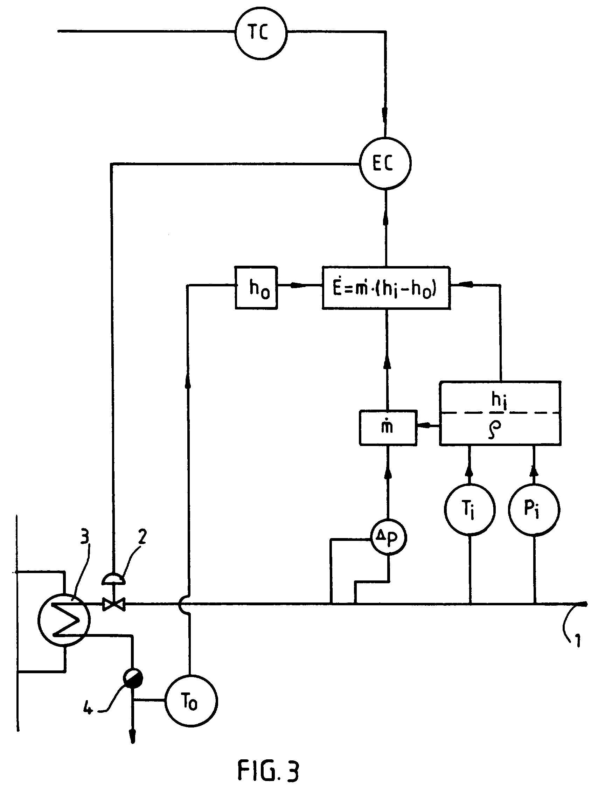

Figur 3       zeigt die Temperaturregelung des gleichen Prozesses nach dem neuen Verfahren.

Wie bereits beschrieben, erfordert nach den bekannten Verfahren die Einstellung einer bestimmten Temperatur eine Regelung der Zufuhrmenge FC mittels eines Ventiles 2 in Abhängigkeit von dem gemessenen Massenstrom durch die Dampfleitung 1. Im beschriebenen Fall wird der Massenstrom durch Messung der Druckdifferenz $\Delta p$ an der Blende 5, die in der Dampfleitung 1 sitzt, vorgenommen. Die somit geregelte Dampfmenge gelangt in den Wärmeübertrager 3 und verursacht im Prozeß die gewünschte Temperaturänderung.

Nach dem neuen Verfahren (hier der Durchführungsform, ohne Berücksichtigung des dynamischen Verhaltens des Wärmeübertragers, aber mit Berücksichtigung des durch das Kondensat abgeführten Enthalpiestromes) tritt anstelle der Übersetzung der Regelgröße Temperatur in die Stellgröße Zufuhrmenge die Übersetzung in die Stellgröße Enthalpiestrom EC (enthalpy control). Eine Abweichung vom Sollwert veranlaßt die Enthalpiesteuerung EC zur Nachführung des Ventiles 2. Die EC erhält die erforderlichen Meßwerte durch Messung des Druckes $P_i$ und der Temperatur $T_i$ in der Dampfzuführung 1. Aus diesen Meßgrößen lassen sich die spezifische Enthalpie $h_i$ und die Dichte $\delta$ durch bekannte elektronische Bauteile (Multiplizierer etc.) oder programmierbare Mikroprozessoren bestimmen. Einen Weg dazu bieten dem Fachmann bekannte Berechnungsblätter (z.B. VDI-Wärmeatlas, 6. Auflage, 1991, DB 1 bis DB 15), wobei die tabellierten Werte als Stützstellen zur Interpolation dazwischen liegender Werte benutzt werden. Die Bestimmung des Massenstromes geschieht auf die bekannte Weise mit Hilfe einer Blende 5. Über der Blende wird der Druckabfall $\Delta p$ gemessen. Aus diesem Meßwert bestimmt man unter Zugrundelegung der bekannten Blendengleichung zunächst den Volumenstrom. Unter Verwendung der aus den Größen $P_i$ und $T_i$ bestimmten Zustandsgröße $\delta$, der Dichte des Arbeitsmediums, wird dann der Massenstrom $\dot{m}$ bestimmt. Zur Bestimmung des den Wärmeübertrager 3 verlassenden Enthalpiestromes reicht die Messung der Temperatur $T_o$ des Kondensats. Die im Wärmetauscher 3 übertragene Enthalpie ergibt sich durch Bildung des Produktes aus Massenstrom $\dot{m}$ und der Differenz der spezifischen Enthalpien $h_i$, $h_o$.

## Patentansprüche

1.    Verfahren zur Regelung eines Wärmetauschers, der von einem Prozeßmedium durchströmt und über eine Zufuhrleitung mit einem gasförmigen Heizmittel gespeist wird, wobei die zugeführte Wärme an den Prozeßstrom übertragen wird und mittels eines Prozeßreglers TC ein Prozeßparameter (Prozeßregelgröße) durch Nachstellung des in den Wärmetauscher hineinfließenden Enthalpiestromes konstant geregelt wird, gekennzeichnet durch folgende Verfahrensschritte:

     a) In der Zufuhrleitung werden der Massenstrom $\dot{m}$, der Druck $P_i$ und die Temperatur $T_i$ des Heizmittels gemessen.

     b) Zusätzlich wird die Temperatur des den Wärmetauscher verlassenden Heizmittels gemessen.

     c) Aus den in den Schritten a) und b) bestimmten Meßgrößen werden die in den Wärmetauscher hinein- und herausfließenden Enthalpieströme bestimmt und daraus die Differenz der beiden Enthalpieströme gebildet, die dem vom Wärmetauscher übertragenen Enthalpiestrom entspricht.

d) Durch Nachstellung des in den Wärmetauscher hineinfließenden Enthalpiestromes wird der vom Wärmetauscher übertragene Enthalpiestrom auf einen Sollwert geregelt, der vom Prozeßregler TC in der Weise nachgestellt wird, daß die Prozeßregelgröße konstant bleibt.

2. Verfahren nach Anspruch 1 dadurch gekennzeichnet, daß das zeitliche Verhalten des Wärmetauschers bei der Bestimmung des übertragenen Enthalpiestromes berücksichtigt wird.

3. Verfahren nach Anspruch 1 - 2 dadurch gekennzeichnet, daß der in den Wärmetauscher fließende Enthalpiestrom durch Veränderung des Heizmittelmassenstromes nachgestellt wird.

4. Verfahren nach Anspruch 1 - 3 dadurch gekennzeichnet, daß als Prozeßregelgröße die Prozeßstromtemperatur verwendet wird.

5. Verfahren nach Anspruch 1 - 4 dadurch gekennzeichnet, daß das Wärmeübertragungsverhalten des Wärmetauschers dadurch überwacht wird, daß der vom Wärmetauscher übertragene Enthalpiestrom mit dem Produkt $k \cdot A \cdot \Delta T$ verglichen wird, wobei $\Delta T$ die Temperaturdifferenz zwischen der Temperatur des Heizmittels und dem Prozeßmedium, A ein Maß für die Wärmeübertragungsfläche und k der Wärmedurchgangskoeffizient ist.

6. Verfahren nach Anspruch 1 - 5 dadurch gekennzeichnet, daß als gasförmiges Heizmittel Wasserdampf verwendet wird.

## Claims

1. A process for regulating a heat exchanger which is traversed by a process medium and is supplied via a feed line with a gaseous heating medium, where the supplied heat is transmitted to the process flow and by means of a process controller TC a process parameter (process controlled variable) is regulated so as to be constant by adjustment of the enthalpy flow flowing into the heat exchanger, characterised by the following process steps:

a) In the feed line the mass flow $\dot{m}$, the pressure P and the temperature $T_i$ of the heating medium are measured.

b) Additionally the temperature of the heating medium issuing from the heat exchanger is measured.

c) From the measurement variables determined in steps a) and b) the enthalpy flows flowing into and out from the heat exchanger are determined and thus the difference between the two enthalpy flows, which corresponds to the enthalpy flow transmitted from the heat exchanger, is formed.

d) By adjustment of the enthalpy flow flowing into the heat exchanger the enthalpy flow transmitted from the heat exchanger is regulated to a setpoint value which is adjusted by the process controller TC in such manner that the process controlled variable remains constant.

2. A process as claimed in Claim 1, characterised in that the time response of the heat exchanger is taken into consideration in the determination of the transmitted enthalpy flow.

3. A process as claimed in Claims 1-2, characterised in that the enthalpy flow flowing into the heat exchanger is adjusted by changing the heating medium mass flow.

4. A process as claimed in Claim 1-3, characterised in that the process flow temperature is used as process controlled variable.

5. A process as claimed in Claim 1-4, characterised in that the heat transfer response of the heat exchanger is monitored in that the enthalpy flow transmitted from the heat exchanger is compared with the product $k \cdot A \cdot \Delta T$, where $\Delta T$ is the temperature difference between the temperature of the heating medium and the process medium, A is a gauge of the heat transmission surface and k is the heat transition coefficient.

6. A process as claimed in Claim 1-5, characterised in that steam is used as gaseous heating medium.

**Revendications**

1. Procédé pour la régulation d'un échangeur de chaleur qui est traversé par un agent de procédé et est alimenté par l'intermédiaire d'une canalisation d'alimentation avec un agent chauffant gazeux, la chaleur introduite étant transférée au flux du procédé et un paramètre du procédé (grandeur réglée du procédé) étant réglé à une valeur constante au moyen d'un régulateur de procédé TC par réglage du flux enthalpique entrant dans l'échangeur de chaleur, caractérisé par les étapes de procédé suivantes :

   a) on mesure dans la canalisation d'alimentation le flux massique ṁ, la pression $P_i$ et la température $T_i$ de l'agent chauffant.
   b) On mesure en outre la température de l'agent chauffant quittant l'échangeur de chaleur.
   c) On détermine à partir des grandeurs de mesure déterminées dans les étapes a) et b) les flux enthalpiques entrant et sortant dans l'échangeur de chaleur et on forme à partir de là la différence des deux flux enthalpiques, qui correspond au flux enthalpique transféré par l'échangeur de chaleur.
   d) Par réglage du flux enthalpique entrant dans l'échangeur de chaleur, on règle le flux enthalpique transféré par l'échangeur de chaleur à une valeur de consigne de la valeur réglée, qui est réglée par le régulateur de procédé TC de sorte que la grandeur réglée du procédé reste constante.

2. Procédé selon la revendication 1, caractérisé en ce qu'on considère le comportement au cours du temps de l'échangeur de chaleur pour la détermination du flux enthalpique transféré.

3. Procédé selon les revendications 1-2, caractérisé en ce qu'on règle le flux enthalpique s'écoulant dans l'échangeur de chaleur par modification du flux massique de l'agent chauffant.

4. Procédé selon les revendications 1-3, caractérisé en ce qu'on utilise en tant que grandeur réglée du procédé la température du flux du procédé.

5. Procédé selon les revendications 1-4, caractérisé en ce qu'on surveille le comportement du transfert de chaleur de l'échangeur de chaleur en ce qu'on compare le flux enthalpique transféré par de l'échangeur de chaleur avec le produit k·A·ΔT, ΔT étant la différence de température entre la température de l'agent chauffant et l'agent de procédé, A une mesure pour la surface de transfert de chaleur et k le coefficient de transfert de chaleur.

6. Procédé selon les revendications 1-5, caractérisé en ce qu'on utilise en tant qu'agent chauffant gazeux de la vapeur d'eau.

FIG.1

FIG.2

FIG. 3